# FASCICULE DE BREVET EUROPEEN

(11) **EP 3 490 812 B1**
(45) Date de publication et mention de la délivrance du brevet: **24.06.2020**
(21) Numéro de dépôt: 17751846.1
(22) Date de dépôt: 14.07.2017
(51) Int. Cl.: B60C 1/00, B60C 13/00, B60C 13/04

(54) **PNEUMATIQUE AVEC INSERT POUR FLANC**
REIFEN MIT EINSATZ FÜR EINE SEITENWAND
TIRE WITH INSERT FOR SIDEWALL

(30) Priorité: 29.07.2016 FR 1670416
(43) Date de publication de la demande: 05.06.2019
(73) Titulaire: Compagnie Générale des Etablissements Michelin, 63000 Clermont-Ferrand (FR)
(72) Inventeur: MERINO LOPEZ, José, 63040 Clermont-Ferrand Cedex 09 (FR); PIALOT, Frédéric, 63040 Clermont-Ferrand Cedex 09 (FR); COSTE, Nathalie, 63040 Clermont-Ferrand Cedex 09 (FR)
(74) Mandataire: Lasson, Cédric Yves
(86) Numéro de dépôt international: PCT/IB2017/054270
(87) Numéro de publication internationale: WO 2018/020354

(56) Documents cités:
- EP-A2- 1 031 440
- WO-A1-2008/052571
- FR-A1- 2 864 470
- FR-A1- 2 918 314
- JP-A- S5 914 502
- US-A- 5 992 487

## Description

### DOMAINE TECHNIQUE DE L'INVENTION

La présente invention concerne un pneumatique. Elle concerne plus particulièrement un pneumatique composé à forte proportion de poudre de pneumatiques recyclés.

### ETAT DE LA TECHNIQUE ANTERIEURE

Le domaine des pneumatiques est soumis à de nombreux impératifs. En effet, le pneumatique doit offrir des garanties de sécurité, de durabilité, et de bonnes performances.

Le pneumatique est soumis à d'importantes agressions extérieures, tels que les nids de poule ou encore les trottoirs. Il est donc important qu'il ait une résistance élevée.

Par ailleurs, les problématiques environnementales conduisent aujourd'hui au développement de produits plus respectueux de l'environnement. Il est notamment connu l'utilisation de poudre de mélange caoutchoutique de pneumatiques recyclés. Cette poudre est constituée de résidus de pneumatiques usés (ou neufs avec des défauts de fabrication) qui sont désassemblés à l'aide de machines spécialement conçues permettant de récupérer les matériaux caoutchoutiques vulcanisés, et d'extraire les renforts textiles et métalliques. Les matériaux caoutchoutiques extraits sont ensuite broyés pour en faire une poudre (parfois désignée « poudrette » du fait de la taille très fine des particules obtenues). Une poudre de ce type peut être utilisée dans de nombreuses applications où l'on souhaite intégrer des matériaux recyclés, que ce soit pour des raisons économiques et/ou environnementales.

Le document KR2009068400 décrit la composition caoutchoutique d'une doublure intérieure de pneumatique. Cette doublure intérieure est un mélange de caoutchouc butyle halogène, de caoutchouc naturel, de caoutchouc butyle recyclé, de noir de carbone et dans une faible mesure de poudre de déchets de pneumatique.

Le document EP2104710 décrit une bande de roulement de pneumatique composé d'une poudre de gomme de xanthane dans une proportion de 10 à 40pce.

De manière générale, pour les pneumatiques, l'utilisation des poudres de matériaux recyclés reste limitée à des proportions faibles, principalement dans le but de ne pas altérer les performances du pneumatique.

Le document US5992487 décrit un pneumatique dont les flancs sont constitués d'une couche interne dépourvue de matériaux recyclés, et une couche externe comportant une poudre de pneumatiques recyclés. Le taux de produit recyclé utilisable reste relativement faible.

Le document JPS5914502 décrit un agencement de pneumatique prévu pour améliorer la résistance à l'ozone et autres attaques susceptibles de détériorer le pneumatique. Les flancs sont constitués d'une double couche. La couche externe est dépourvue de cire ou d'agent antivieillissement, évitant ainsi la détérioration par dispersion de ces constituants.

Le document EP2918428 décrit un pneumatique dont les flancs sont pourvus de motifs ou éléments décoratifs. Pour éviter ou freiner la détérioration de ces éléments, le pneumatique décrit comporte une couche externe de protection, agencé de façon à recouvrir les éléments visuels.

Le document EP1031440 décrit un pneumatique comportant des flancs constitués à partir d'un matériau caoutchoutique recyclé. Un mélange caoutchoutique spécifique comportant une portion de matériaux recyclés est présentée dans le document. La mise en œuvre oblige donc à utiliser ce mélange spécifique.

Le document WO2008052571 décrit un pneumatique comprenant au moins un élément structurel à base de poudre obtenue à partir de caoutchouc recyclé. La poudre est traitée pour permettre de mettre en œuvre un procédé de fabrication dans lequel la poudre peut à nouveau être vulcanisée, tout en conservant au mieux ses propriétés d'origine. Le document décrit un pneumatique comportant une zone de flanc partiellement constituée d'un tel matériau. Ce procédé est complexe et coûteux. Le taux de produit recyclé utilisable reste limité.

Par ailleurs le document FR2864470 divulgue un tissu biélastique de protection d'un flanc de pneumatique.

Pour pallier ces différents inconvénients, l'invention prévoit différents moyens techniques.

### EXPOSE DE L'INVENTION

Tout d'abord, un premier objet de l'invention consiste à permettre une utilisation à large échelle des résidus de pneumatiques arrivés en fin de vie.

Un autre objet de l'invention consiste à diminuer les coûts de matière première des pneumatiques tout en assurant un maintien du niveau de qualité des produits fabriqués.

Un autre objet de l'invention consiste à prévoir un pneumatique composé dans une forte proportion de matériaux issus de pneumatiques en fin de vie, sans perte de performance du pneumatique.

Encore un autre objet de l'invention consiste à diminuer les coûts de matière première des pneumatiques tout en permettant de réduire les risques de fissuration par attaque chimique et/ou UV.

Un autre objet de l'invention consiste à prévoir un pneumatique à coût réduit.

Pour ce faire, l'invention prévoit un pneumatique avec des flancs, une zone sommet pourvue d'une bande de roulement, une structure de renfort s'étendant entre les flancs et passant par la zone sommet, la portion des flancs axialement extérieure à la structure de renfort comportant un insert comprenant une première composition élastomère servant de matrice dans lequel est réparti, de façon sensiblement uniforme, une seconde composition élastomère issue de pneumatiques recyclés, la proportion de seconde composition étant supérieure ou égale à 40%, l'insert étant recouvert axialement extérieurement par une couche de protection. Une telle architecture, utilisée à l'échelle industrielle pour fabriquer des milliers de produits, permet d'utiliser d'importantes quantités de produits recyclés. Cette approche est favorable à l'environnement d'une part en réduisant la quantité de déchets, et d'autre part en économisant les ressources de produits neufs. Par ailleurs, l'agencement prévu, avec une couche de protection, permet l'utilisation d'un taux élevé de composition issue de pneumatiques recyclés sans perte de performance du produit neuf et sans risque de dégradations, notamment dues aux UV. En effet, une telle couche de protection (de nature élastomère ou en tissu), procure une protection contre les attaques chimiques, l'oxydation, les rayons UV, qui seraient susceptibles de causer des fissurations sur l'insert si ce dernier n'était pas protégé.

Selon un mode de réalisation avantageux, la première composition est une composition caoutchoutique.

Selon un mode de réalisation avantageux, la proportion de seconde composition est supérieure à 60%.

Selon un mode de réalisation avantageux, la couche de protection est une couche de composition élastomère.

Selon un autre mode de réalisation, la couche de protection est constituée d'un tissu bi-élastique. Ce type de matériau offre l'avantage d'une grande légèreté, un faible coût, une facilité de mise en œuvre, tout en procurant une protection efficace. Le tissu bi-élastique comporte de préférence de l'élastane. Ce tissu offre des propriétés mécaniques de résistance et de durabilité particulièrement avantageuse. Selon un autre exemple de réalisation, le tissu bi-élastique est collé sur l'insert.

Selon encore un mode de réalisation avantageux, la seconde composition élastomère présente une granulométrie inférieure ou égale à 1mm et préférentiellement inférieure ou égale à 0,5mm, et encore plus préférentiellement inférieure ou égale à 0,2mm de diamètre moyen de chacune des particules. Une telle granulométrie permet de préparer un mélange hybride bien dosé, avec une excellente répartition de la poudre dans la matrice.

Selon un mode de réalisation avantageux, la première composition élastomère présente un taux élevé d'antioxydants, comme par exemple du 6PPD avec un taux avantageusement supérieur à 2 pce.

Dans un mode de réalisation avantageux, la couche de protection se prolonge radialement au moins d'un côté au-delà de l'insert.

Selon encore un mode de réalisation avantageux, la couche de protection est repliée axialement au moins d'un côté de l'insert. Le pliage permet d'envelopper l'extrémité radialement inférieure et/ou supérieure de l'insert, pour une meilleure protection.

L'invention prévoit également un procédé de fabrication d'un pneumatique tel que préalablement décrit, comprenant une étape consistant à préparer un insert de mélange hybride caoutchoutique constitué d'une première composition élastomère servant de matrice, dans lequel est réparti de façon sensiblement uniforme une seconde composition élastomère issue de pneumatiques recyclés, la proportion de seconde composition étant supérieure à 40%, et plus préférentiellement supérieure à 60%.

**De** manière avantageuse, le procédé comprend une étape d'assemblage dans laquelle l'insert est appliqué sur la zone destinée à constituer un flanc du pneumatique en cours de fabrication.

Egalement de manière avantageuse, le procédé comprend une étape d'assemblage dans laquelle une couche de protection est appliquée sur l'insert de manière à être axialement externe au flanc.

Selon un mode de réalisation avantageux, la couche de protection est préencollée avant d'être appliquée contre l'insert. Une telle étape est avantageuse en particulier lorsqu'un tissu est utilisé, du fait d'une grande facilité de mise en place de l'ensemble résultant.

### DESCRIPTION DES FIGURES

**Tous** les détails de réalisation sont donnés dans la description qui suit, complétée par les figures 1 à 6, présentées uniquement à des fins d'exemples non limitatifs, et dans lesquelles :
- la figure 1 est une vue coupe schématique d'une moitié d'un exemple de pneumatique pourvu d'un insert agencé sur la zone axialement externe du flanc ;
- les figures 2 à 5 sont des représentations schématiques illustrant l'insert du pneumatique de la figure 1, recouvert de différents agencements de couches de protection ;
- la figure 6 illustre schématiquement l'insert des figures 2 à 5 avant la mise en place d'une couche de protection.

### DESCRIPTION DETAILLEE DE L'INVENTION

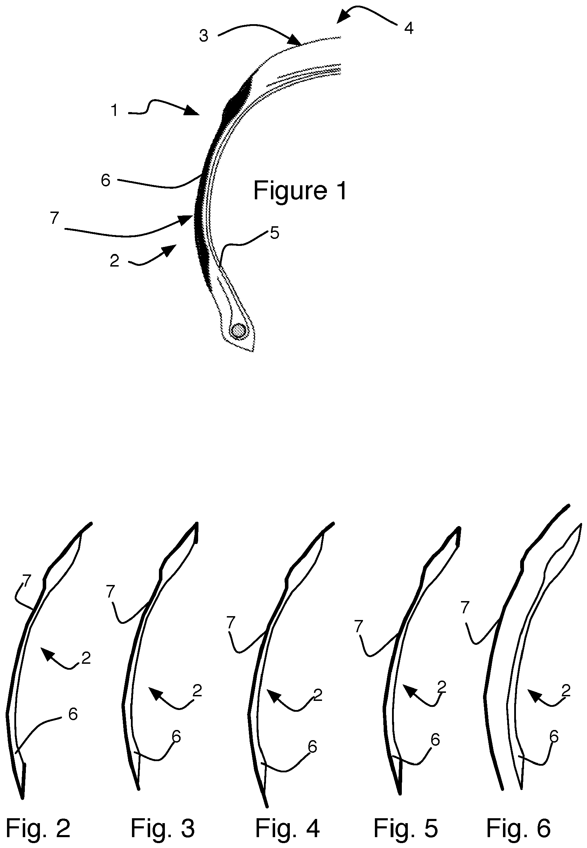

**La** figure 1 est une représentation schématique d'une vue en coupe d'un exemple de pneumatique comprenant des flancs 2, une zone sommet 3 pourvue d'une bande de roulement 4. Tel qu'illustré, le pneumatique prévoit une structure de renfort 5 qui s'étend d'un flanc à l'autre, en passant par la zone de sommet 3.

Un insert 6 est agencé sur au moins un flanc, contre la portion axialement extérieure à la structure de renfort 5.

Cet insert est constitué par une première composition élastomère servant de matrice dans lequel est réparti, de façon sensiblement uniforme, une seconde composition élastomère issue de pneumatiques recyclés.

La proportion de seconde composition élastomère est supérieure ou égale à 40%, et plus préférentiellement supérieure à 60%.

La seconde composition élastomère présente une granulométrie inférieure à 1mm et préférentiellement inférieure à 0,5mm, et encore plus préférentiellement inférieure à 0,2mm de diamètre moyen de chacune des particules.

Une couche de protection 7 recouvre l'insert afin de le protéger des agressions externes, en particulier les agressions aux UV, susceptibles de créer des phénomènes d'oxydation tels que des fissures.

En fonction des besoins et usages prévus, la couche 7 de protection peut être réalisée avec une couche de composition élastomère, ou elle peut aussi être constituée d'un tissu bi-élastique, préférentiellement à base d'élastane.

Les figures 2 à 5 montrent quatre exemples de réalisation d'insert de flanc avec différents types de pliage de la couche de protection contre une ou deux extrémités de l'insert 6. Dans l'exemple de la figure 2 et de la figure 4, la couche de protection est agencée pour se prolonger au-delà de l'insert. Dans les exemples des figures 2, 3 et 5, la couche de protection est repliée de façon à contourner au moins une des extrémités de l'insert. Le pliage permet d'envelopper l'extrémité radialement inférieure et/ou supérieure de l'insert, pour une meilleure protection.

Pour fabriquer un pneumatique tel que préalablement décrit et illustré, il est prévu un procédé de fabrication d'un pneumatique comprenant une étape préparatoire dans laquelle un insert 6 est préfabriqué. La couche de protection prévue (textile ou élastomère) est ensuite appliquée contre la partie destinée à se trouver du côté externe du pneumatique, tel que montré à la figure 6. Pour faciliter les opérations d'assemblage, la couche de protection est préférablement préencollée avant d'être appliquée contre l'insert. Cette étape est surtout avantageuse dans le cas d'utilisation d'une couche textile. En cas de pliage de la couche de protection contre une des deux ou les deux extrémités de l'insert, le tissu ou la couche élastomère, de la dimension adaptée, est simplement retourné et appliqué contre la ou les zones prévues, tel qu'illustré dans les différents exemples des figures 2 à 5.

En phase industrielle, une pluralité d'inserts sont conjointement préparés pour assemblage ultérieur, assurant ainsi une productivité élevé.

Lors de l'assemblage des différents constituants du pneumatique, l'insert est appliqué sur la zone destinée à constituer un flanc 2 du pneumatique en cours de fabrication.

### Numéros de référence employés sur les figures

- 1: Pneumatique
- 2: Flanc
- 3: Zone sommet
- 4: Bande de roulement
- 5: Structure de renfort
- 6: Insert
- 7: Couche de protection

## Revendications

1. Pneumatique (1) avec des flancs (2), une zone sommet (3) pourvue d'une bande de roulement (4), une structure de renfort (5) s'étendant entre les flancs et passant par la zone sommet, **caractérisé en ce que** la portion des flancs (2) axialement extérieure à la structure de renfort (5) comporte un insert (6) comprenant une première composition élastomère servant de matrice dans lequel est réparti, de façon sensiblement uniforme, une seconde composition élastomère issue de pneumatiques recyclés, la proportion de seconde composition étant supérieure ou égale à 40%, **et en ce que** l'insert (6) est recouvert axialement extérieurement par une couche (7) de protection constituée d'un tissu bi-élastique.

2. Pneumatique (1) selon la revendication 1, **caractérisé en ce que** la première composition est une composition caoutchoutique.

3. Pneumatique (1) selon l'une des revendications 1 ou 2, **caractérisé en ce que** la proportion de seconde composition est supérieure à 60%..

4. Pneumatique (1) selon l'une quelconque des revendication 1 à 3, **caractérisé en ce que** la couche (7) de protection est une couche de composition élastomère.

5. Pneumatique (1) selon l'une quelconque des revendications précédentes, **caractérisé en ce que** le tissus bi-élastique comporte de l'élastane.

6. Pneumatique (1) selon l'une quelconque des revendications précédentes, **caractérisé en ce que** le tissus bi-élastique est collé sur l'insert (6).

7. Pneumatique (1) selon l'une quelconque des revendications précédentes, **caractérisé en ce que** la seconde composition élastomère présente une granulométrie inférieure ou égale à 1mm et préférentiellement inférieure ou égale à 0,5mm, et encore plus préférentiellement inférieure ou égale à 0,2mm de diamètre moyen de chacune des particules.

8. Pneumatique (1) selon l'une quelconque des revendication 1 à 7, **caractérisé en ce que** la première composition élastomère présente un taux élevé d'antioxydants.

9. Pneumatique selon l'une quelconque des revendications 1 à 8, **caractérisé en ce que** la couche (7) de protection se prolonge radialement au moins d'un côté au-delà de l'insert (6).

10. Pneumatique selon l'une quelconque des revendications 1 à 9, **caractérisé en ce que** la couche (7) de protection est repliée axialement au moins d'un côté de l'insert (6).

11. Procédé de fabrication d'un pneumatique (1) selon l'une quelconque des revendications 1 à 10, comprenant une étape consistant à préparer un insert (6) de mélange hybride caoutchoutique constitué d'une première composition élastomère servant de matrice dans lequel est réparti de façon sensiblement uniforme une seconde composition élastomère issue de pneumatiques recyclés, la proportion de seconde composition étant supérieure à 40%, et plus préférentiellement supérieure à 60%.

12. Procédé de fabrication d'un pneumatique (1) selon la revendication 11, comprenant une étape d'assemblage dans laquelle l'insert (6) est appliqué sur la zone destinée à constituer un flanc (2) du pneumatique en cours de fabrication.

13. Procédé de fabrication d'un pneumatique (1) selon la revendication 12, comprenant une étape d'assemblage dans laquelle une couche (7) de protection est appliquée sur l'insert (6), de manière à être axialement externe au flanc (2).

14. Procédé de fabrication d'un pneumatique selon la revendication 13, **caractérisé en ce que** la couche (7) de protection est préencollée avant d'être appliquée contre l'insert (6).

## Patentansprüche

1. Reifen (1) mit Flanken (2), einem Scheitelbereich (3), der mit einem Laufstreifen (4) versehen ist, einer Verstärkungsstruktur (5), die sich zwischen den Flanken erstreckt und durch den Scheitelbereich führt, **dadurch gekennzeichnet, dass** der Abschnitt der Flanken (2), der axial außerhalb der Verstärkungsstruktur (5) gelegen ist, einen Einsatz (6) aufweist, der eine erste Elastomerzusammensetzung umfasst, die als Matrix dient, in dem eine zweite Elastomerzusammensetzung aus recycelten Reifen im Wesentlichen gleichmäßig verteilt ist, wobei der Zweitzusammensetzungsanteil größer als oder gleich 40 % ist, und dadurch, dass der Einsatz (6) axial außerhalb von einer Schutzschicht (7) bedeckt ist, die von einem bi-elastischen Gewebe gebildet ist.

2. Reifen (1) nach Anspruch 1, **dadurch gekennzeichnet, dass** die erste Zusammensetzung eine Gummizusammensetzung ist.

3. Reifen (1) nach einem der Ansprüche 1 oder 2, **dadurch gekennzeichnet, dass** der Anteil der zweiten Zusammensetzung größer als 60 % ist.

4. Reifen (1) nach einem der Ansprüche 1 bis 3, **dadurch gekennzeichnet, dass** die Schutzschicht (7) eine Schicht aus einer Elastomerzusammensetzung ist.

5. Reifen (1) nach einem der vorhergehenden Ansprüche, **dadurch gekennzeichnet, dass** das bi-elastische Gewebe Elastan aufweist.

6. Reifen (1) nach einem der vorhergehenden Ansprüche, **dadurch gekennzeichnet, dass** das bi-elastische Gewebe auf den Einsatz (6) geklebt ist.

7. Reifen (1) nach einem der vorhergehenden Ansprüche, **dadurch gekennzeichnet, dass** die zweite Elastomerzusammensetzung eine Granulometrie kleiner als oder gleich 1 mm und vorzugsweise kleiner als oder gleich 0,5 mm, und besser noch kleiner als oder gleich 0,2 mm des mittleren Durchmessers jedes der Teilchen aufweist.

8. Reifen (1) nach einem der Ansprüche 1 bis 7, **dadurch gekennzeichnet, dass** die erste Elastomerzusammensetzung eine erhöhte Antioxidantienrate aufweist.

9. Reifen nach einem der Ansprüche 1 bis 8, **dadurch gekennzeichnet, dass** sich die Schutzschicht (7) radial zumindest auf einer Seite über den Einsatz (6) hinaus fortsetzt.

10. Reifen nach einem der Ansprüche 1 bis 9, **dadurch gekennzeichnet, dass** die Schutzschicht (7) zumindest auf einer Seite des Einsatzes (6) radial umgeschlagen ist.

11. Verfahren zur Herstellung eines Reifens (1) nach einem der Ansprüche 1 bis 10, umfassend einen Schritt, der darin besteht, einen Einsatz (6) aus einer Gummi-Hybridmischung vorzubereiten, der von einer ersten Elastomerzusammensetzung gebildet ist, die als Matrix dient, in dem eine zweite Elastomerzusammensetzung aus recycelten Reifen im Wesentlichen gleichmäßig verteilt ist, wobei der Zweitzusammensetzungsanteil größer als 40 % und besser noch größer als 60 % ist.

12. Verfahren zur Herstellung eines Reifens (1) nach Anspruch 11, umfassend einen Schritt des Zusammensetzens, wobei der Einsatz (6) auf den Bereich aufgebracht wird, der dazu bestimmt ist, eine Flanke (2) des Reifens zu bilden, der sich in der Herstellung befindet.

13. Verfahren zur Herstellung eines Reifens (1) nach Anspruch 12, umfassend einen Schritt des Zusammensetzens, wobei eine Schutzschicht (7) auf den Einsatz (6) aufgebracht wird, so dass sie sich axial außerhalb der Flanke (2) befindet.

14. Verfahren zur Herstellung eines Reifens nach Anspruch 13, **dadurch gekennzeichnet, dass** die Schutzschicht (7) zuvor mit Kleber versehen wird, bevor sie auf den Einsatz (6) aufgebracht wird.

## Claims

1. Tyre (1) with sidewalls (2), a crown region (3) provided with a tread (4), a reinforcing structure (5) extending between the sidewalls and passing via the crown region, **characterized in that** the portion of the sidewalls (2) that is axially outside the reinforcing structure (5) comprises an insert (6) comprising a first elastomer composition serving as a matrix, within which a second elastomer composition originating from recycled tyres is distributed substantially uniformly, the proportion of second composition being greater than or equal to 40%, **and in that** the insert (6) is covered axially on the outside by a protective layer (7) consisting of a two-way stretch fabric.

2. Tyre (1) according to Claim 1, **characterized in that** the first composition is a rubber composition.

3. Tyre (1) according to one of Claims 1 and 2, **characterized in that** the proportion of second composition is greater than 60%.

4. Tyre (1) according to any one of Claims 1 to 3, **characterized in that** the protective layer (7) is a layer of elastomer composition.

5. Tyre (1) according to any one of the preceding claims, **characterized in that** the two-way stretch fabric comprises elastane.

6. Tyre (1) according to any one of the preceding claims, **characterized in that** the two-way stretch fabric is adhesively bonded to the insert (6).

7. Tyre (1) according to any one of the preceding claims, **characterized in that** the second elastomer composition has a particle size distribution of less than or equal to 1 mm and preferentially less than or equal to 0.5 mm and even more preferentially of less than or equal to 0.2 mm of mean diameter of each of the particles.

8. Tyre (1) according to any one of Claims 1 to 7, **characterized in that** the first elastomer composition has a high content of antioxidants.

9. Tyre according to any one of Claims 1 to 8, **characterized in that** the protective layer (7) is extended radially at least on one side beyond the insert (6).

10. Tyre according to any one of Claims 1 to 9, **characterized in that** the protective layer (7) is folded back axially at least on one side of the insert (6).

11. Process for manufacturing a tyre (1) according to any one of Claims 1 to 10, comprising a step consisting in preparing an insert (6) of hybrid rubber compound, consisting of a first elastomer composition serving as a matrix, within which a second elastomer composition originating from recycled tyres is distributed substantially uniformly, the proportion of second composition being greater than 40%, and more preferentially greater than 60%.

12. Process for manufacturing a tyre (1) according to Claim 11, comprising a step of assembly in which the insert (6) is applied to the region intended to form a sidewall (2) of the tyre during manufacture.

13. Process for manufacturing a tyre (1) according to Claim 12, comprising a step of assembly in which a protective layer (7) is applied to the insert (6) so as to be axially outside the sidewall (2).

14. Process for manufacturing a tyre according to Claim 13, **characterized in that** the protective layer (7) is precoated with adhesive before being applied against the insert (6).
